# EUROPÄISCHE PATENTSCHRIFT

(11) **EP 2 743 794 B1**
(45) Veröffentlichungstag und Bekanntmachung des Hinweises auf die Patenterteilung: **29.06.2016**
(21) Anmeldenummer: 12197288.9
(22) Anmeldetag: 14.12.2012
(51) Int. Cl.: G06F 1/32, H02J 9/00, B60R 16/03, G06F 11/30

(54) **Verfahren zur Überprüfung des Betriebszustandes einer Ansteuereinheit für eine elektrische Komponente, insbesondere für eine Fahrzeugkomponente**
Method for checking the operating state of a control unit for an electrical component, in particular for a vehicle component
Procédé de surveillance de l'état de fonctionnement d'une unité de commande pour un composant électrique, notamment pour un composant de véhicule

(43) Veröffentlichungstag der Anmeldung: 18.06.2014
(73) Patentinhaber: Elmos Semiconductor Aktiengesellschaft, 44227 Dortmund (DE)
(72) Erfinder: Schmitz, Christian, 44227 Dortmund (DE)
(74) Vertreter: dompatent von Kreisler Selting Werner - Partnerschaft von Patent- und Rechtsanwälten mbB

(56) Entgegenhaltungen:
- DE-A1- 10 255 430
- GB-A- 2 487 945
- US-A1- 2009 198 407

## Beschreibung

Die Erfindung betrifft ein Verfahren zur Überprüfung des Betriebszustandes und/oder der Einnahme eines Betriebszustandes einer Ansteuereinheit für eine elektrische bzw. elektronische Komponente eines Geräts, einer Anlage, einer Vorrichtung odgl., insbesondere für eine Fahrzeugkomponente durch eine der Ansteuereinheit übergeordnete Überwachungseinheit, die den Betriebszustand der Ansteuereinheit steuert sowie überwacht und die einen mit einem Energiezwischenspeicher versehenen Spannungsregler zur Erzeugung einer Versorgungsspannung für die Ansteuereinheit aufweist.

Moderne Steuerelemente für insbesondere Fahrzeugkomponenten wie beispielsweise Fensterheber, Türverriegelungen, Sitzverstellungen o.dgl. können neben dem aktiven Betriebszustand weitere Zustände einnehmen, in denen sie eine reduzierte Energieaufnahme aufweisen. Hierbei haben sich im Wesentlichen die Modi NORMAL (aktiver Zustand), STOP (Energiespar-Mode) und SLEEP (geringstmögliche Energieaufnahme) etabliert. Ein Beispiel für ein entsprechendes Verfahren ist in DE-A-102 55 430 beschrieben.

Zur Überwachung der Steuergeräte dahingehend, ob diese korrekt arbeiten, haben sich sogenannte WATCHDOGS etabliert, die Teil einer Überwachungseinheit sind und unter anderem in sogenannten System Basic Chip (SBC) untergebracht sein können sowie bei Fehlfunktionen des zu überwachenden Steuergerätes oder der Baugruppe, die von dem Steuergerät angesteuert wird, ein Rücksetzen des Steuergerätes erzwingen. In den Betriebsmodi mit reduzierter Energieaufnahme (STOP und SLEEP-Mode) kann dieser WATCHDOG in der Regel nicht mehr korrekt bedient werden, da die zu diesem Zweck benötigten Steuergerät-Ressourcen (wie z. B. das Kommunikations-Interface in Form beispielsweise eines SPI-Interface) nicht zur Verfügung stehen. Daher geht man bei Überwachungseinheiten mit WATCHDOG-Funktion dazu über, den WATCHDOG dann, wenn sich die Ansteuereinheit nicht in ihrem NORMAL-Mode befindet, zu deaktivieren.

Aufgabe der Erfindung ist es, eine Ansteuereinheit (beispielsweise Mikrocontroller) für eine elektrische Komponente von einer übergeordneten Überwachungseinheit (beispielsweise SBC) auch dann noch auf die korrekte Funktion und auf den korrekten Übergang vom NORMAL-Mode in einen Energiesparzustand zu überwachen, wenn die WATCHDOG-Funktion deaktiviert ist.

Zur Lösung dieser Aufgabe wird mit der Erfindung ein Verfahren zur Überprüfung des Betriebszustandes einer Ansteuereinheit für eine elektrische Komponente, insbesondere für eine Fahrzeugkomponente durch eine der Ansteuereinheit übergeordnete Überwachungseinheit zur Steuerung des Betriebszustandes und zur Überwachung der Ansteuereinheit vorgeschlagen, wobei die Überwachungseinheit einen mit einem Energiezwischenspeicher versehenen Spannungsregler zur Erzeugung einer Versorgungsspannung für die Ansteuereinheit aufweist und wobei gemäß den Schritten des Anspruchs 1 verfahren wird.

Die Erfindung macht sich die Erkenntnis zunutze, dass die Ansteuereinheit (nachfolgend Mikrocontroller genannt) dann, wenn der Übergang vom NORMAL-Mode in einen Energiesparzustand korrekt abläuft, eine reduzierte Energieaufnahme aufweist. Dies äußert sich beispielsweise durch eine Reduzierung der Stromaufnahme. Man könnte also die Ruhestromaufnahme der Ansteuereinheit im Energiesparzustand detektieren. Dies ist allerdings mit einem relativ hohen Aufwand verbunden, um präzise implementiert werden zu können, weshalb nach der Erfindung auch ein alternativer Weg werden kann, indem die Überwachungseinheit (SBC) einen die Entladecharakteristik des Energiezwischenspeichers eines Spannungsreglers in der Überwachungseinheit beschreibenden Entladeparameter überprüft. Der Spannungsregler sorgt für die Spannungsversorgung der Ansteuereinheit. Durch den Weiterbetrieb des Spannungsreglers (gegebenenfalls mit veränderten, an den zu erwartenden geringeren Energieaufwand angepassten Parametern) bei in einem Energiesparzustand befindlicher Ansteuereinheit kann nun überprüft werden, ob die Ansteuereinheit tatsächlich eine geringere Energieaufnahme hat. Ist dies nicht der Fall, was anhand des Entladecharakteristik-Parameters erkannt werden kann, so kann detektiert werden, dass die Ansteuereinheit den ihr zugewiesenen Energiezustand nicht beziehungsweise nicht korrekt eingenommen hat. Die daraus zu ziehenden Konsequenzen für die weiteren Ansteuerungen des Systems (beispielsweise Einleitung einer FAILSAFE-Steuerung) sind applikationsabhängig.

Beispielsweise kann der Spannungsregler dann, wenn sich die von der Überwachungseinheit überwachte Ansteuereinheit in dem Energiesparzustand beziehungsweise in einem ihrer mehreren möglichen Energiesparzustände befindet, mit einem konfigurierbaren Dutycycle getaktet werden, wobei die sich daraus ergebende verfügbare Energie der Ansteuereinheit mit Hilfe des im Spannungsregler vorhandenen Energiezwischenspeichers (beispielsweise Kondensators) zur Verfügung gestellt wird. Ist die Lastenergie der Ansteuereinheit erwartungsgemäß geringer als die vom Spannungsregler zugeführte Energie, wird die Spannung am Energiezwischenspeicher einen gewissen Wert (Unterspannungsschwelle) nicht unterschreiten. Ist dagegen die Lastenergie der Ansteuereinheit höher als erwartet, wird die vorgegebene Unterspannungsschwelle über dem Energiezwischenspeicher des Spannungsreglers unterschritten.

Dieses Unterschreiten des Spannungsabfalls über dem Energiezwischenspeicher wird als Indikator für eine zu hohe Energieaufnahme bewertet und kann nun für applikationsabhängig einzuleitende Maßnahmen z. B. dem Wechsel in den NORMAL-Mode mit dann wieder aktiviertem WATCHDOG genutzt werden. Sollte eine Fehlfunktion der Ansteuereinheit vorliegen, kann das System dann mit den üblichen Verfahren zurückgesetzt werden.

Über die variablen Parameter "Dutycycle" und "Kapazität" des Energiezwischenspeichers kann das System aus Überwachungseinheit und Ansteuereinheit kostenoptimiert und applikationsspezifisch angepasst werden. Der Dutycycle des Spannungsreglers kann dabei zum Beispiel per SPI konfigurierbar sein.

Der wesentliche Vorteil des erfindungsgemäß vorgeschlagenen Verfahrens ist darin zu sehen, dass zusätzlich zu den bei derartigen Überwachungskonzepten in Steuerungen von elektrischen Komponenten vorhandenen Funktionsblöcken keine weiteren zusätzlichen Funktionsblöcke benötigt werden. Ein Unterspannungsmonitor und ein Reset-Generator sind in den bekannten Systemen schon heute vorhanden. Die Implementierung des erfindungsgemäßen Verfahrens erfordert lediglich geringfügige zusätzlich digitale Verknüpfungen beispielsweise eines Zeitgliedes, der Unterspannungsinformation und der Aktivierungssignale des Spannungsreglers. Damit lässt sich die Erfindung ohne nennenswerten insbesondere Hardware-Aufwand in bekannten Konzepten realisieren. Dies gilt insbesondere für getaktete DC/DC-Konverter als Spannungsregler, bei denen die Untersuchung des Ladestromverhaltens für die Analyse des von der Ansteuereinheit eingenommenen Zustandes nicht so ohne Weiteres realisierbar ist.

Wesensmerkmal der Erfindung ist also die Erkennung des korrekten Übergangs des Mikrocontrollers einer Ansteuereinheit in einen Energiesparzustand und gegebenenfalls eines Fehlerfalls des Mikrocontrollers, und zwar trotz deaktiviertem WATCHDOG.

Ferner lässt sich das System trotz deaktiviertem WATCHDOG zurücksetzen. Der Übergang des Mikrocontrollers in einen Energiesparzustand lässt sich erfindungsgemäß anhand der Reduzierung des Energieaufnahme erkennen, indem ein die Entladecharakteristik des Energiezwischenspeichers beschreibender Entladeparameter überwacht wird.

In vorteilhafter Ausgestaltung der Erfindung kann ferner vorgesehen sein, dass in der Überwachungseinheit der aktuell ermittelte Ist-Entladeparameter mit einem Soll-Entladeparameter verglichen wird und dass in der Überwachungseinheit eine Fehlersignal erzeugt wird, wenn der Ist-Entladeparameter um mehr als einen vorgebbarer Differenzwert von dem Soll-Entladeparameter abweicht.

Wie bereits oben ausgeführt, kann mit Vorteil vorgesehen sein, dass der Spannungsregler einen insbesondere getakteten DC/DC-Konverter aufweist. Hierbei ist es zweckmäßig, einen Entladeparameter zu wählen, der den Zeitverlauf der Entladespannung über dem Energiezwischenspeicher repräsentiert. Der Spannungsregler kann alternativ auch als Linearregler ausgebildet sein.

In weiterer vorteilhafter Ausgestaltung der Erfindung kann vorgesehen sein, dass die dem Energiezwischenspeicher zuzuführende Energie im Normalbetrieb der Ansteuereinheit größer ist als in dem mindestens einen beziehungsweise in jedem Energiesparzustand der Ansteuereinheit.

Wie bereits oben erwähnt, kann die Prozedur, die in einem detektierten Fehlerfall abläuft, applikationsabhängig unterschiedlich ablaufen. Diesbezüglich gilt als vorteilhafte Ausgestaltung der Erfindung ganz grundsätzlich, dass in der Überwachungseinheit ein Fehlersignal erzeugt wird, wenn die aktuelle Energieaufnahme der Ansteuereinheit bei Ansteuerung durch die Überwachungseinheit in den Energiesparzustand oder in einen der Energiesparzustände größer ist, insbesondere um einen vorgegebenen Differenzwert größer ist als die erwartete Energieaufnahme, und dass auf das Fehlersignal in die Ansteuereinheit rückgesetzt und/oder in ihren Normalbetriebszustand überführt und/oder die elektrische Komponente unter Umgehung der Ansteuereinheit in einen vorgegebenen Betriebszustand oder in ihren bestimmungsgemäßen Betriebszustand überführt wird.

Das erfindungsgemäße Konzept lässt sich auch dann realisieren, wenn die Ansteuereinheit in einen von mindestens zwei, beispielsweise drei Energiesparzuständen überführbar ist, wobei die Energieaufnahme in dem einen Energiesparzustand geringer ist als in dem anderen Energiesparzustand.

Die Erfindung wird nachfolgend anhand eines Ausführungsbeispiels unter Bezugnahme auf die Zeichnung näher erläutert. Im Einzelnen zeigen daher:
- Fig. 1: schematisch als Block-Schaltbild die hierarchische Struktur der Ansteuerung und Überwachung einzelner Komponenten in einem Fahrzeug,
- Fig. 2: eine detailliertere Erstellung des Zusammenspiels zwischen einer Überwachungseinheit z.B. (SBC) und einer Ansteuereinheit (beispielsweise Mikrocontroller) als Teil des Gesamtkonzepts gemäß Fig. 1,
- Fig. 3: verschiedene Signalverläufe an den in Fig. 2 im Einzelnen bezeichneten Stellen bei Einnahme verschiedener Modi, und Fig. 4 eine detailliertere Blockschaltbild-Darstellung für beispielsweise eine Sicherheitsapplikation der Scheinwerfer- bzw. Außenbeleuchtungssteuerung bei einem Fahrzeug.

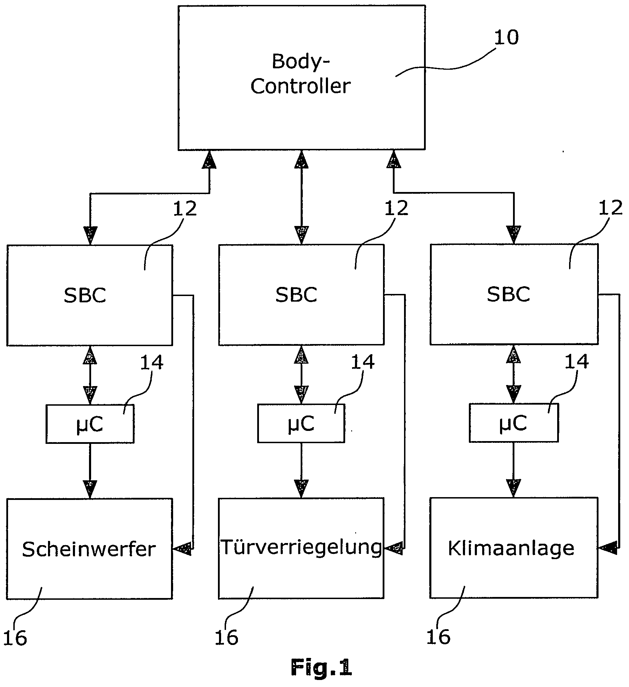

Fig. 1 zeigt ganz allgemein in Blockschaltbild-Darstellung die hierarchische Struktur über die Ansteuerung einer elektrischen Komponente, bei der es sich beispielhaft um eine Fahrzeugkomponente handelt. Auf der hierarchisch obersten Ebene befindet sich ein (beziehungsweise mehrere) sogenannter Body-Controller 10, unterhalb dessen mehrere Überwachungseinheiten (beispielsweise SBCs) 12 angeordnet sind. Jeder Überwachungseinheit 12 ist eine Ansteuereinheit 14 (beispielsweise Mikrocontroller) zugeordnet, die wiederum eine Fahrzeugkomponente 16 ansteuert, bei der es sich beispielsweise um die Scheinwerfer- bzw. Außenbeleuchtungsanlage, die Türverriegelungsvorrichtung oder aber auch die Klimaanlage eines Fahrzeuges handelt. Die Überwachungseinheiten 12 überwachen dabei die ihnen jeweils zugeordneten Ansteuereinheiten auf Einhaltung ihrer korrekten Funktionsweise und insbesondere auch daraufhin, ob diese Ansteuereinheiten den Übergang von beispielsweise dem Normalbetriebszustand in einen Energiesparzustand korrekt durchführen.

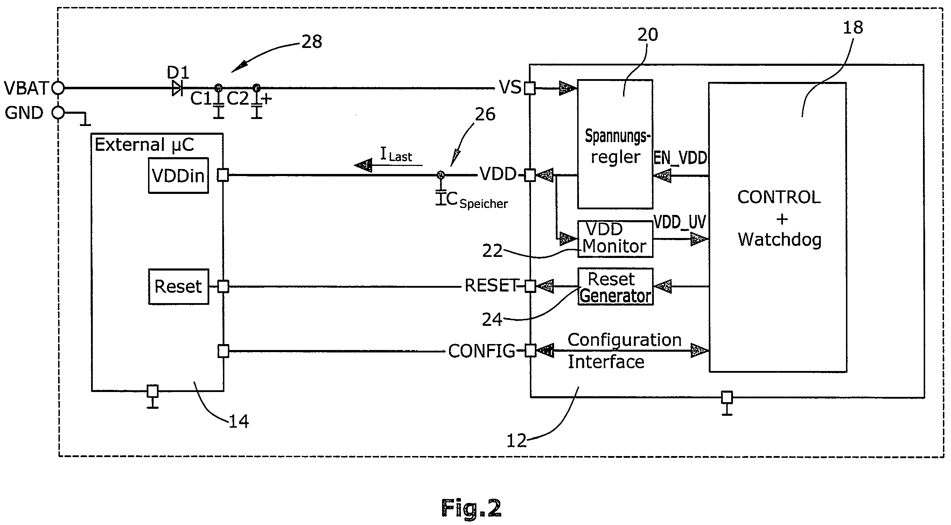

Fig. 2 zeigt ein Paar einander zugehöriger Überwachungs- und Ansteuereinheiten. Zu erkennen ist, dass die Überwachungseinheit 12 eine zentrale Steuereinheit 18 mit WATCHDOG-Funktion, einen Spannungsregler 20, einen Unterspannungsmonitor 22 und einen Reset-Generator 24 aufweist. Der Spannungsregler 20 versorgt die Ansteuereinheit 14 beziehungsweise deren Mikrocontroller mit Energie. Dem Spannungsregler 20 zugeordnet ist ein Energiezwischenspeicher 26, der z.B., wie in Fig. 2 gezeigt, außerhalb der Überwachungseinheit 12 angeordnet sein kann. Mit 28 ist ein Spannungsbuffer zur Energieversorgung der Überwachungseinheit 12 aus dem Bordnetz bezeichnet.

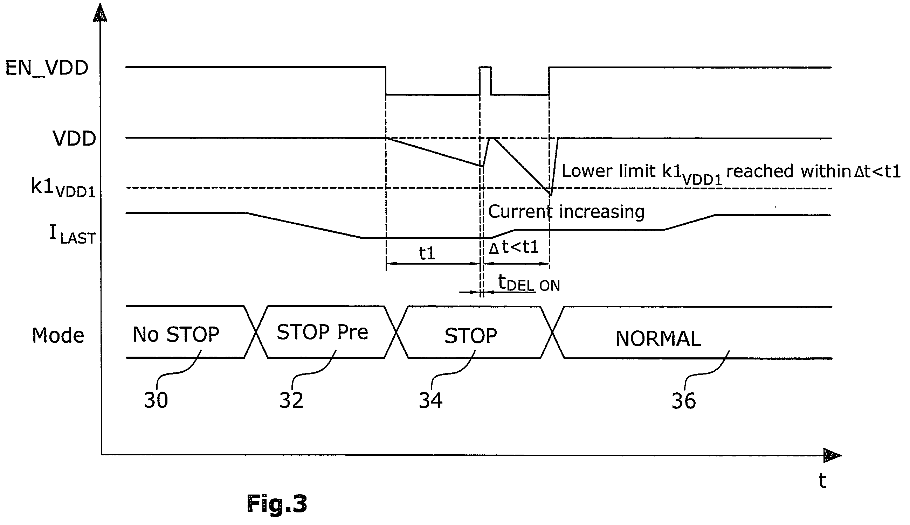

Die Signalverläufe an einigen der in Fig. 2 gezeigten Stellen des Block-Schaltbildes sind in Fig. 3 gezeigt. Dort ist die Situation beschrieben, in der die Ansteuereinheit 14 aus einem Normalbetriebszustand 30 über einen Übergangszustand 32 in einen Energiesparzustand 34 überführt werden soll. Dabei zeigt sich in diesem Beispielsfall, dass die Spannung VDD am Energiezwischenspeicher 26 schneller als für den Energiesparzustand der Ansteuereinheit 14 erwartet bis unterhalb einer Unterspannungsschwelle absinkt. Dies wird als Kriterium für eine Fehlfunktion der Ansteuereinheit 14 bei Einnahme des Energiesparzustandes bzw. beim Übergang in den Energiesparzustand gewertet, weshalb in dieser Applikation die Ansteuereinheit 14 von der Überwachungseinheit 12 wieder in den Normalbetriebszustand 36 überführt wird.

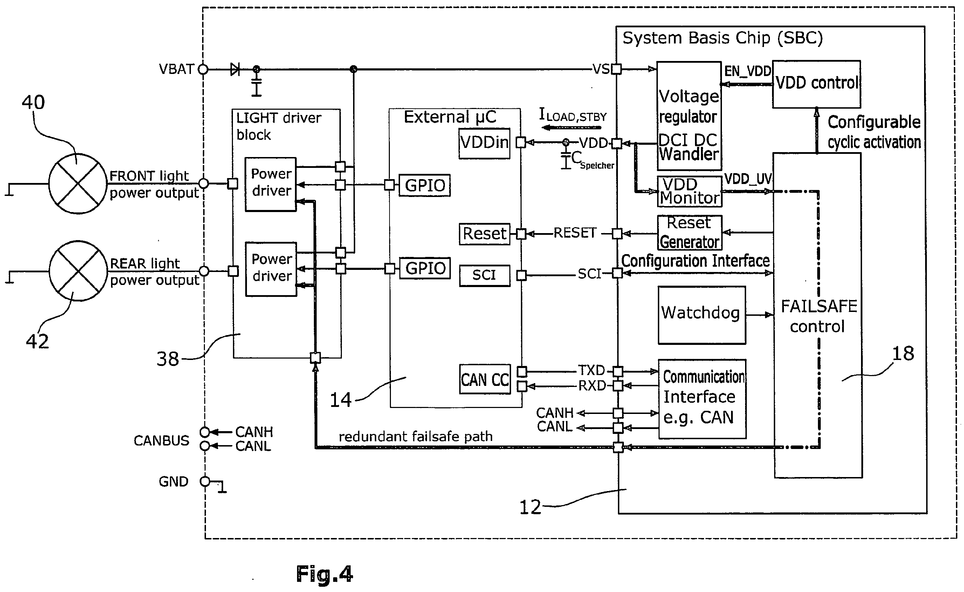

Sollte die Ansteuereinheit 14 diesen Normalbetriebszustand nicht einnehmen können (beispielsweise wegen einer Fehlfunktion o.dgl.), so können weitere Maßnahmen getroffen werden, wie beispielsweise eine FAILSAFE-Funktion eingeleitet werden, was in Fig. 4 gezeigt ist. Gemäß Fig. 4 dient die Ansteuereinheit 14 der Ansteuerung eines Treibers 38 für die Front- und Rückscheinwerfer 40, 42 eines Fahrzeuges. In Fig. 4 sind zudem noch die Anschlüsse für einen Kommunikationsbus (in diesem Fall ein CAN-Bus) dargestellt. Im Fehlerfall führt die zentrale Steuereinheit 18 der Überwachungseinheit 12 eine Zwangsaktivierung des Treibers 38 durch, um die Außenbeleuchtung am Fahrzeug aus Sicherheitsgründen zu aktivieren, wenn festgestellt wird, dass die Ansteuereinheit 14 des Treibers 38 fehlerhaft ist, weil sie beispielsweise auch auf ein Reset-Signal der Überwachungseinheit 12 hin, welches infolge der fehlerhaften Einnahme eines Energiesparzustandes der Ansteuereinheit 14 erzeugt worden ist, nicht reagiert.

## Patentansprüche

1. Verfahren zur Überprüfung des Betriebszustandes einer Ansteuereinheit (14) für eine elektrische Komponente, insbesondere für eine Fahrzeugkomponente durch eine der Ansteuereinheit (14) übergeordnete Überwachungseinheit (12) zur Steuerung des Betriebszustandes und zur Überwachung der Ansteuereinheit (14), wobei die Überwachungseinheit (12) einen mit einem Energiezwischenspeicher (26) versehenen Spannungsregler (20) zur Erzeugung einer Versorgungsspannung für die Ansteuereinheit (14) aufweist und wobei bei dem Verfahren
- die Ansteuereinheit (14) von der Überwachungseinheit (12) wahlweise in einen Normalbetriebszustand für die Ansteuerung der elektrischen Komponente in deren bestimmungsgemäßem Betriebszustand und in mindestens einen Energiesparzustand überführbar ist, in dem die Ansteuereinheit (14) eine erwartete, gegenüber ihrem Normalbetriebszustand verringerte Energieaufnahme aufweist,
**dadurch gekennzeichnet,**
- **dass** dann, wenn die Ansteuereinheit (14) von der Überwachungseinheit (12) zur Einnahme des Energiesparzustandes oder eines der Energiesparzustände angesteuert ist, in der Überwachungseinheit (12) anhand mindestens eines die Entladecharakteristik des Energiezwischenspeichers (26) beschreibenden Entladeparameters die aktuelle Energieaufnahme der Ansteuereinheit (14) auf im Wesentlichen Einhaltung der erwarteten Energieaufnahme überprüft wird.

2. Verfahren nach Anspruch 1 **dadurch gekennzeichnet, dass** in der Überwachungseinheit (12) der aktuell ermittelte Ist-Entladeparameter mit einem Soll-Entladeparameter verglichen wird und dass in der Überwachungseinheit (12) eine Fehlersignal erzeugt wird, wenn der Ist-Entladeparameter um mehr als einen vorgebbarer Differenzwert von dem Soll-Entladeparameter abweicht.

3. Verfahren nach Anspruch 1 oder 2, **dadurch gekennzeichnet, dass** der Spannungsregler (20) einen Linearregler oder einen DC/DC-Konverter, der insbesondere getaktet ist, aufweist.

4. Verfahren nach Anspruch 3, **dadurch gekennzeichnet, dass** der Entladeparameter den Zeitverlauf der Entladespannung über dem Energiezwischenspeicher (26) repräsentiert.

5. Verfahren nach Anspruch 3 oder 4, **dadurch gekennzeichnet, dass** die dem Energiezwischenspeicher (26) zuzuführende Energie im Normalbetrieb der Ansteuereinheit größer ist als in dem mindestens einen beziehungsweise in jedem Energiesparzustand der Ansteuereinheit (14).

6. Verfahren nach einem der Ansprüche 1 bis 5, **dadurch gekennzeichnet, dass** in der Überwachungseinheit (12) ein Fehlersignal erzeugt wird, wenn die aktuelle Energieaufnahme der Ansteuereinheit (14) bei Ansteuerung durch die Überwachungseinheit (12) in den Energiesparzustand oder in einen der Energiesparzustände größer ist, insbesondere um einen vorgegebenen Differenzwert größer ist als die erwartete Energieaufnahme, und dass auf das Fehlersignal in die Ansteuereinheit (14) rückgestetzt und/oder in ihren Normalbetriebszustand überführt und/oder die elektrische Komponente unter Umgehung der Ansteuereinheit (14) in einen vorgegebenen Betriebszustand oder in ihren bestimmungsgemäßen Betriebszustand überführt wird.

7. Verfahren nach einem der Anspruche 1 bis 6 **dadurch gekennzeichnet, dass** die Ansteuereinheit (14) in einen von mindestens zwei Energiesparzustände überführbar ist, wobei die Energieaufnahme in dem den einen Energiesparzustand geringer ist als in dem anderen Energiesparzustand.

## Claims

1. A method for checking the operating state of a control unit (14) for an electrical component, in particular for a vehicle component, by use of a monitoring unit (12) superordinate to the control unit (14) and provided for control of the operating state and for monitoring the control unit (14), wherein the monitoring unit (12) comprises a voltage regulator (20) including a temporary energy store (26) and operative for generating a supply voltage for the control unit (14), and wherein, in said method
- the control unit (14) is adapted to be selectively set, by the monitoring unit (12), into a normal operating state for controlling the electrical component in its intended operating state and into at least one energy saving state in which the control unit (14) has an expected energy input reduced relative to its normal operating state, **characterized in**
- **that**, in the monitoring unit (12), when the control unit (14) is controlled by the monitoring unit (12) to assume the energy saving state or one of the energy saving states, the current energy input of the control unit (14) is checked, on the basis of at least one discharge parameter describing the discharge characteristic of the temporary energy store (26), for maintenance of substantially the expected energy input.

2. The method according to claim 1, **characterized in that**, in the monitoring unit (12), the currently detected actual discharge parameter is compared to a desired discharge parameter and that an error signal is generated in the monitoring unit (12) if the actual discharge parameter deviates from the desired discharge parameter by more than a pre-definable differential value.

3. The method according to claim 1 or 2, **characterized in that** the voltage regulator (20) comprises a linear regulator or a preferably clocked DC/DC converter.

4. The method according to claim 3, **characterized in that** the discharge parameter represents the temporal development of the discharge voltage across the temporary energy store (26).

5. The method according to claim 3 or 4, **characterized in that** the energy to be supplied to the temporary energy store (26) is higher in normal operation of the control unit than in the at least one energy saving state and respectively in each energy saving state of the control unit (14).

6. The method according to any one of claims 1 to 5, **characterized in that** an error signal is generated in the monitoring unit (12) if, when the control unit (14) is controlled by the monitoring unit (12) into the energy saving state or into one of the energy saving states, the current energy input of the control unit is higher, in particular by a predefined differential value higher than the expected energy input, and that, in response to the error signal, the control unit (14) is reset and/or is changed into its normal operating state and/or the electrical component, with the control unit (14) being bypassed, is set into a predefined operating state or its intended operating state.

7. The method according to any one of claims 1 to 6, **characterized in that** the control unit (14) can be set into one of at least two energy saving states, the energy input in one of the energy saving states being lower than in the other energy saving state.

## Revendications

1. Procédé de vérification de l'état de fonctionnement d'une unité de commande (14) pour un composant électrique, en particulier pour un composant de véhicule, par une unité de surveillance (12) hiérarchiquement supérieure à l'unité de commande (14), pour la commande de l'état de fonctionnement et pour la surveillance de l'unité de commande (14), l'unité de surveillance (12) comportant un régulateur de tension (20) équipé d'un accumulateur intermédiaire d'énergie (26) pour générer une tension d'alimentation de l'unité de commande (14),
procédé dans lequel
- l'unité de commande (14) peut être amenée par l'unité de surveillance (12) sélectivement dans un état de fonctionnement normal pour la commande du composant électrique dans son état de fonctionnement conforme à l'utilisation prévue et dans au moins un état d'économie d'énergie dans lequel l'unité de commande (14) présente une consommation d'énergie attendue réduite par rapport à son état de fonctionnement normal,
**caractérisé en ce que**
lorsque l'unité de commande (14) est commandée par l'unité de surveillance (12) pour adopter l'état d'économie d'énergie ou l'un des états d'économie d'énergie, la consommation d'énergie en cours de l'unité de commande (14) est vérifiée dans l'unité de surveillance (12) à l'aide d'au moins un paramètre de décharge décrivant la caractéristique de décharge de l'accumulateur intermédiaire d'énergie (26) afin de contrôler si la consommation d'énergie attendue est sensiblement respectée.

2. Procédé selon la revendication 1, **caractérisé en ce que**, dans l'unité de surveillance (12), le paramètre de décharge réel effectivement déterminé est comparé à un paramètre de décharge théorique, et **en ce que**, dans l'unité de surveillance (12), un signal d'erreur est généré lorsque le paramètre de décharge réel diffère du paramètre de décharge théorique de plus d'une valeur différentielle prédéterminable.

3. Procédé selon la revendication 1 ou 2, **caractérisé en ce que** le régulateur de tension (20) comporte un régulateur linéaire ou un convertisseur CC/CC qui, en particulier, est synchronisé.

4. Procédé selon la revendication 3, **caractérisé en ce que** le paramètre de décharge représente la courbe temporelle de la tension de décharge au-dessus de l'accumulateur intermédiaire d'énergie (26).

5. Procédé selon la revendication 3 ou 4, **caractérisé en ce que** l'énergie devant être acheminée à l'accumulateur intermédiaire d'énergie (26) est plus importante en fonctionnement normal de l'unité de commande que dans l'état d'économie d'énergie, au moins au nombre de un, ou dans chacun des états d'économie d'énergie de l'unité de commande (14).

6. Procédé selon l'une des revendications 1 à 5, **caractérisé en ce qu'**un signal d'erreur est généré dans l'unité de surveillance (12) lorsque la consommation d'énergie en cours de l'unité de commande (14), en cas de commande de celle-ci par l'unité de surveillance (12) pour adopter l'état d'économie d'énergie ou l'un des états d'économie d'énergie, dépasse, notamment d'une valeur différentielle prédéterminée, la consommation d'énergie attendue, et **en ce que**, au signal d'erreur, l'unité de commande (14) est réinitialisée et/ou amenée dans son état de fonctionnement normal et/ou le composant électrique est amené dans un état de fonctionnement prédéterminé ou dans son état de fonctionnement conforme à l'utilisation prévue par contournement de l'unité de commande (14).

7. Procédé selon l'une des revendications 1 à 6, **caractérisé en ce que** l'unité de commande (14) peut être amenée dans l'un d'au moins deux états d'économie d'énergie, la consommation d'énergie dans l'un des états d'économie d'énergie étant plus faible que dans l'autre état d'économie d'énergie.
